# EUROPEAN PATENT SPECIFICATION

(11) **EP 2 643 876 B1**
(45) Date of publication and mention of the grant of the patent: **12.08.2015**
(21) Application number: 10765752.0
(22) Date of filing: 28.09.2010
(51) Int. Cl.: H01M 8/04, H01M 8/24, C25B 9/18

(54) **CO-FLOW / COUNTER-FLOW FUEL CELL OR ELECTROLYSIS CELL**
GLEICHSTROM-/GEGENSTROMBRENNSTOFFZELLE ODER ELEKTROLYSEZELLE
PILE À COMBUSTIBLE OU ÉLECTROLYSEUR À CO-COURANT/CONTRECOURANT

(43) Date of publication of application: 02.10.2013
(73) Proprietor: Haldor Topsøe A/S, 2800 Kgs. Lyngby (DK)
(72) Inventor: JENSEN, Kresten, Juel, Nikolaj, Laut, DK-2850 Nærum (DK); WEICHEL, Steen, DK-2970 Hørsholm (DK)
(86) International application number: PCT/EP2010/005898
(87) International publication number: WO 2012/041338

(56) References cited:
- EP-A1- 1 447 870
- US-A- 4 708 916
- US-A1- 2003 186 102

## Description

The present invention concerns Cell stacks, in particular Solid Oxide Fuel Cell (SOFC) stacks or Solid Oxide Electrolysis Cell (SOEC) stacks, where the flow directions of the cathode gas relative to the anode gas internally in each cell are combined so that each cell has counter-flow as well as co-flow. Further a plurality of gas streams can be merged after passing a first part of each cell, before the gas stream is again split and carried to the second part of each cell.

In the following, the invention is explained in relation to SOFC. Accordingly, in the SOFC the cathode gas is an oxidation gas and the anode gas is a fuel gas. The invention can, however, also be used for other types of cells such as SOEC as already mentioned or even Polymer Electrolyte fuel cells (PEM) or Direct Methanol Fuel Cells (DMFC).

An SOFC comprises an oxygen-ion conducting electrolyte, a cathode where oxygen is reduced and an anode where hydrogen is oxidised. The overall reaction in an SOFC is that hydrogen and oxygen electrochemically react to produce electricity, heat and water. The operating temperature for an SOFC is in the range 550 to 1000°C, preferably circa 650 to 850°C. An SOFC delivers in ordinary operation a voltage of approximately 0.8V. To increase the total voltage output, the fuel cells are assembled in stacks in which the fuel cells are electrically connected via interconnector plates.

In order to produce the required hydrogen, the anode usually possesses catalytic activity for the steam reforming of hydrocarbons, particularly natural gas, whereby hydrogen, carbon dioxide and carbon monoxide are generated. Steam reforming of methane, the main component of natural gas, can be described by the following equations:

CH₄ + H₂0 ⇆ CO + 3H₂

CH₄ + CO₂ ⇆ 2CO + 2H₂

CO + H₂0 ⇆ CO₂ + H₂

During operation an oxidant such as air is supplied to the solid oxide fuel cell in the cathode region. Fuel such as hydrogen is supplied in the anode region of the fuel cell. Alternatively a hydrocarbon fuel such as methane is supplied in the anode region where it is converted to hydrogen and carbon oxides by the above reactions. Hydrogen passes through the porous anode and reacts at the anode/electrolyte interface with oxygen ions generated on the cathode side and conducted through the electrolyte. Oxygen ions are created in the cathode side as a result of the acceptance of electrons from the external circuit of the cell.

Interconnects serve to separate the anode and cathode sides of adjacent cell units and at the same time enable current conduction between anode and cathode. Interconnects are usually provided with a plurality of channels for the passage of anode gas (fuel) on one side of the interconnect and cathode gas (oxidant gas) on the other side. The flow direction of the anode gas is defined as the substantial direction from the anode gas inlet region to the anode gas outlet region of a cell unit. Likewise the flow direction of the cathode gas is defined as the substantial direction from the cathode gas inlet region to the cathode gas outlet region of a cell unit. Thus, internally a cell can have co-flow if the anode gas flow direction is substantially the same as the cathode gas flow direction or cross-flow if the anode gas flow direction is substantially perpendicular to the cathode gas flow direction or counter-flow if the anode gas flow direction is substantially opposite to the cathode gas flow direction.

Conventionally, the cells are stacked on top of each other with complete overlap resulting in a stack with for instance co-flow having all anode gas and cathode gas inlets on one side of the stack and all anode gas and cathode gas outlets on the opposite side. Due to the overall exothermicity of the electrochemical process, the outlet gases leave at a higher temperature than the inlet temperature. When combined in an SOFC stack operating at for instance 750°C a significant temperature gradient across the stack is generated. These temperature gradients across the stack are to some extent necessary for the cooling of the stack, since the air cooling is proportional to the temperature gradient, but large thermal gradients induce thermal stresses in the stack which are highly undesirable and they entail difference in current density and electrical resistance. Therefore the problem of thermal management of an SOFC stack exists: to reduce thermal gradients enough to avoid unacceptable stresses but have sufficiently large thermal gradients to be able to cool the stack with said gasses.

The thermal gradients necessary to cool the stack set a limit to the electrical effect which a cell stack can obtain. A high average cell temperature is advantageous with regard to electric effect, and the average cell temperature should be as close to the maximum limit for the materials of the cell and of cell stack. But since temperature gradients are necessary to cool the stack, the average cell temperature is in reality lower than this maximum limit temperature. The area specific resistance (ASR) of the cell is higher with a low average cell temperature, thus the electrical effect is lowered with a lowering average cell temperature.

US 6,830,844 describes a system for thermal management in a fuel cell assembly, particularly for preventing temperature gradients of above 200°C across the cathodes by periodically reversing the air flow direction across the cathode, thereby alternating the supply and exhaust edges of the cathodes.

US 6,803,136 describes a fuel cell stack with a partial overlap in between the cells comprising the stack resulting in an overall spiral configuration of the cells. The cells are angularly offset to one another which provides ease of manifolding and thermal management.

US4708916A describes a stacked structure for forming a molten carbonate fuel cell. A plurality of unit cells are stacked, and separator elements are respectively interposed between the adjacent unit cells. First and second internal manifolds extend in the stacking direction, at both sides of the stacked structure. Third internal manifold extends at the center of the structure, in the direction of stacking. First fuel gas passages, communicating with the first and third internal manifolds, are formed at the anode side of the separator element. Second fuel gas passages, communicating with the second and third internal manifolds, are formed at the anode side of the separator element. Thus, the fuel gas flows through the first internal manifold, the first fuel gas passages and the third internal manifold, and the fuel gas flows through the second internal manifold, the second fuel gas passages and the third internal manifold. As a result, the current density distribution and the temperature distribution are uniform.

It is an object of the present invention to provide a cell stack, particularly a solid oxide fuel cell stack with a high average cell temperature which results in a minimised ASR, and thereby to improve the cell and cell stack electrical effect as compared to state of the art cell stacks.

It is a further object of the present invention to provide a cell stack, particularly a solid oxide fuel cell stack where the cell outlet temperature is close to or equal to the maximum temperature of the cell with respect to the cell and stack components durability, whereby the cooling efficiency of the cathode gas and anode gas is improved.

It is yet another object of the present invention to provide a cell stack, particularly a solid oxide fuel cell stack with networking of the anode gas where the anode gas streams from each cell in the cell stack are collected and mixed after passing a part of each cell and then split and passed over the remaining part of each cell, whereby fuel utilisation is optimized.

It is an object of the present invention to provide a cell stack, particularly a solid oxide fuel cell stack, where the flow on each cell is changed from counter-flow on a first part of the cell to co-flow on a second part of the cell of the anode gas relative to the cathode gas on each cell, which optimises the heat distribution on each cell and in the cell stack as a whole.

It is a further object of the present invention to provide a cell stack, particularly a solid oxide fuel cell stack, where the counter-flow / co-flow area ratio can be varied to fit the specific desired operating point.

These and other objects are solved by the invention.

Accordingly, we provide a cell stack, in particular a solid oxide fuel cell stack comprising a plurality of planar cells arranged in layers on top of each other in planes parallel to each other, in which each cell unit comprises an anode, an electrolyte and a cathode, and where the anode and cathode of adjacent cells are separated from each other by an interconnect. Each cell of the cell stack has at least one anode gas inlet region, at least one cathode gas inlet region; at least one anode gas outlet region and at least one cathode gas outlet region. The anode part of each cell in the stack or the cathode part is divided into at least a first part and a second part. In any of these two cases, each cell is thus divided into at least a first part and a second part. Each cell in the cell stack has counter-flow of the anode gas flow direction relative to the cathode gas flow direction in the first part of the cell; and co-flow of the anode gas flow direction relative to the cathode gas flow direction in the second part of the cell.

In state of the art fuel cells, a choice between the advantages of counter-flow and co-flow respectively would have to be made, the advantages being:
Counter-flow advantage: High average cell temperature resulting in a low area specific resistance (ASR) of the cells.
Co-flow advantage: The outlet temperature of anode and cathode gas is nearly as high or equal to the maximum temperature of the stack (which is not possible for counter-flow). This maximises the cooling efficiency of cathode gas and anode gas. On the system level this gain means low parasitic loss to gas blowers and a reduced heat exchanger capacity requirement.

But in the flow pattern according to this invention, where the first part of the cell operates in counter-flow and the second part of the cell operates in co-flow, the advantages of counter-flow and co-flow are combined. Hence a low ASR and a maximised cooling efficiency of the reactant gasses are achieved in combination in each of the particular cells in a cell stack, since both flow geometries are achieved simultaneously. This is particularly the case when operating with a reforming i.e. cooling anode gas. The high average cell temperature is achieved by the optimised heat distribution in the cell and thus in the stack. This optimised heat distribution also means that the internal stresses are lowered because the differential temperature of the stack is lowered. Otherwise, internal stresses demand considerable compression forces to the stack and may lead to damage of the stack.

The actual ratio between the counter-flow area and the co-flow area of each cell in the stack can be varied depending on the type of anode gas, the operation parameters, the stack-specific characteristics etc. to achieve the best operation efficiency especially with regard to ASR and cooling efficiency. In an embodiment of the invention, the counter-flow area of the cell is circa 80% of the active area of the cell whereas the co-flow area is circa 20% of the active area of the cell. In further embodiments of the invention the counter-flow area is between 85% and 70% of each cell or between 95% and 50% of each cell.

It is possible to apply these principles of the described counter-flow/co-flow cell to the cathode side of the cell as well as the anode side of the cell. I.e. either the cathode gas flows substantially in one direction whereas the anode gas flows first in a substantially opposite direction of the cathode gas and thereafter in the substantially same direction as the cathode gas or; the anode gas flows substantially in one direction whereas the cathode gas flows first in a substantially opposite direction of the anode gas and thereafter in the substantially same direction as the anode gas. But changing flow directions of the anode gas (the fuel) is usually simpler due to smaller flow rates of the anode gas relative to the cathode gas.

Thus, in one embodiment of the invention, the cathode gas flows in a first direction across the substantially entire electro-chemically active cathode part of each of the plurality of cells in the cell stack, and the anode gas flows in a second direction substantially opposite the first direction across a first anode part of each cell and then flows substantially in said first direction across a second anode part of each cell.

In an embodiment of the invention, the afore mentioned flow pattern is obtained by locating the cathode gas inlet region near a first edge of the cell and the cathode gas outlet region near a second edge of the cell. It is understood that the substantial entire active area of the cell is located between said first and said second edge of the cell. The cathode gas thus enters through the inlet region near the first cell edge, flows over the active area of the cathode in a first direction and then exits through the cathode gas outlet near the second cell edge.

On the opposite side of the cell, viz. on the anode region, the anode gas enters through the first anode gas inlet region located *between* said first and second edge of the cell. The anode gas then performs the first anode gas flow pass where it flows in a *second* direction substantially opposite said first direction before it exits through the first anode gas outlet region located near the first edge of the cell. Hence in this first anode gas flow pass across a first part of the cell, the anode and cathode gas have counter-flow. After exiting through the first anode gas outlet region, the anode gas is carried through an internal or external ducting/manifolding and re-enters the anode part of the cell through the second anode gas inlet region which is also located between the first and the second edge of the cell. The anode gas then performs a second flow pass in the *first* direction from the second anode gas inlet region across a second part of the cell and exits through the second anode gas outlet region located near the second edge of the cell.

Hence, on this second part of the cell, the anode gas and cathode gas flow in co-flow.

The cell may have an internal or external gas manifolding or a combination of the two, as is well described in the state of the art. In one embodiment, the cathode gas may be carried to and from the cathode parts of the cells in a stack by an external manifolding, such that the cathode gas inlet region is actually almost the entire part of the first edge of the cells. The anode gas may in this embodiment be carried to and from the anode parts of the cells in a stack by an internal manifolding, such as holes in the interconnects.

In an embodiment of the invention, the intermediate anode gas streaming out of each cell in a cell stack is networked. Here "intermediate" means the gas having performed the first flow pass, but before having performed the second flow pass. The anode gas exiting each cell via the first anode gas outlet region is collected in the manifolding and mixed to a substantially homogeneous intermediate common anode gas mix, before it is split and carried further to each second anode gas inlet region of each cell in the stack. This networking of the intermediate anode gas streams compensates for differences in the cell fuel utilisation and therefore provides a higher overall fuel utilisation.

In a further embodiment of the invention, a combination of counter-flow and co-flow over each cell is provided by other means than plural gas inlet and outlet regions. Instead the gas flow channels of the interconnects are adapted to provide a gas flow in substantially a first direction on a first face of the interconnect and a gas flow in a second, substantially opposite direction on a first part of the second face of the interconnect as well as a gas flow in said first direction on a second part of the second face of the interconnect. This embodiment can be adapted such that the cathode gas only flows in one direction. As the cathode gas flow is generally larger than the anode gas flow, it can be advantageous to construct the interconnect gas flow channels such that the cathode gas flows substantially in only one direction, whereas the anode gas flows in substantially two directions considering for instance pressure loss.

### Features of the invention

1. A cell stack comprising a plurality of cells adapted to operate as fuel cells or electrolysis cells and stacked on top of each other to form a plurality of cell layers in the cell stack, each of said cells comprising
   - an anode,
   - an electrolyte,
   - and a cathode,
      where each cell is flat and has
   - at least one edge,
   - at least one anode gas inlet region,
   - at least one anode gas outlet region,
   - at least one cathode gas inlet region,
   - and at least one cathode gas outlet region,
   where each layer of cells is divided by an interconnect with gas flow channels on each side, viz. a first side facing the anode side of an adjacent cell and providing an anode gas flow, and a second side facing the cathode side of an adjacent cell and providing a cathode gas flow, wherein a first part of each cell has a counter-flow of the anode gas flow direction relative to the cathode gas flow direction, and wherein a second part of each cell has a co-flow of the anode gas flow direction relative to the cathode gas flow direction.
2. A cell stack comprising a plurality of cells according to feature 1, wherein the cathode gas flows in a first direction across the substantially entire cathode part of each cell and the anode gas flows in a second direction opposite the first direction across a first anode part of each cell and flows in said first direction across a second anode part of each cell.
3. A cell stack comprising a plurality of cells according to feature 2, wherein
   - the cathode gas inlet region is located near a first edge of the cell,
   - the cathode gas outlet region is located near a second edge of the cell,
   - and a first anode gas inlet region is located between the first and the second edge of the cell,
   - a first anode gas outlet region is located near the first edge of the cell,
   - a second anode gas inlet region is located between the first and the second edge of the cell,
   - and a second anode gas outlet region is located near the second edge of the cell.
4. A cell stack comprising a plurality of cells according to feature 3, comprising a manifolding adapted to collect and mix the anode gas from the first anode gas outlet region of each cell and to distribute the mixed anode gas further to the second anode gas inlet region of each cell, whereby the anode gas performs a first flow pass in counter-flow relative to the cathode gas, and after said collecting, mixing and distributing said anode gas performs a second flow pass in co-flow relative to the cathode gas.
5. A cell stack comprising a plurality of cells according to feature 1 or 2, wherein the gas flow channels facing the anode side of each cell are adapted to provide anode gas flow in a first direction across a first part of each cell and are adapted to provide anode gas flow in a second direction opposite the first direction across a second part of each cell.
6. A cell stack comprising a plurality of cells according to any of the preceding features, wherein the first part of each cell which has counter-flow is larger than the second part of each cell which has co-flow, said first part preferably being between 95% and 50% of each cell or preferably between 85% and 70% of each cell.
7. A cell stack comprising a plurality of cells according to any of the preceding features, wherein the cells are Solid Oxide Fuel Cells or Solid Electrolysis Cells.
8. Method of operating at least one cell stack comprising a plurality of cells, where said cells are adapted to operate as fuel cells or electrolysis cells and are stacked on top of each other to form a plurality of cell layers in the at least one cell stack, each of said cells comprising an anode, an electrolyte and a cathode, where each cell is flat and has at least one edge, at least one anode gas inlet region, at least one anode gas outlet region, at least one cathode gas inlet region and at least one cathode gas outlet region, where each layer of cells is divided by an interconnect with gas channels on each side, viz. a first side facing the anode side of an adjacent cell and providing an anode gas flow, and a second side facing the cathode side of an adjacent cell and providing a cathode gas flow, said method comprising the steps of
   - providing a counter-flow of the anode gas flow direction relative to the cathode gas flow direction across more than half the total cell area
   - providing a co-flow of the anode gas flow direction relative to the cathode gas flow direction across less than half the total cell area.
9. Method of operating at least one cell stack comprising a plurality of cells according to feature 8 further comprising the steps of
   - providing the counter-flow of the anode gas flow direction relative to the cathode gas flow direction to a first cell stack of two cell stacks which are serially connected in relation to both the anode and the cathode gas flow
   - providing the co-flow of the anode gas flow direction relative to the cathode gas flow direction to a second cell stack of said two cell stacks which are serially connected in relation to both the anode and the cathode gas flow.
10. Method according to feature 8 of operating at least one cell stack comprising a plurality of cells according to any of the features 1 to 7, said method further comprising the steps of
   - providing the counter-flow of the anode gas flow direction relative to the cathode gas flow direction to a first part of each cell in the at least one cell stack
   - providing the co-flow of the anode gas flow direction relative to the cathode gas flow direction to a second part of each cell in the at least one cell stack.
11. Use of a cell stack comprising a plurality of cells according to any of the features 1 to 7 to operate as a Solid Oxide Fuel Cell stack or an Solid Oxide Electrolysis Cell stack.

### Position Number Overview.

- 101, 201: Cell, anode surface
- 102, 202: First anode part of cell
- 103, 203: Second anode part of cell
- 104, 204: Cathode gas inlet region
- 105, 205: Cathode gas outlet region
- 106, 206: First anode gas inlet region
- 107: Second anode gas inlet region
- 108, 208: First anode gas outlet region
- 109: Second anode gas outlet region
- 110, 210: First gas flow direction
- 111 211: second gas flow direction

Fig. 1 is a top view of the anode surface of a cell according to an embodiment of the invention showing the anode gas flow principle as well as the cathode gas flow principle on the opposite, not visible surface,
Fig. 2 is a top view of the anode side of a cell according to an alternative embodiment of the invention, showing the anode gas flow principle as well as the cathode gas flow principle on the opposite, not visible surface,
Fig. 3 is a chart diagram where a graph shows the correlation between cell temperature and position on the cell in the cathode gas flow direction of the cell according to an embodiment of the invention, and
Fig. 4 is a chart diagram where a graph shows the correlation between cell temperature and position in cathode gas flow direction of the cell in a state of the art Co-flow cell.

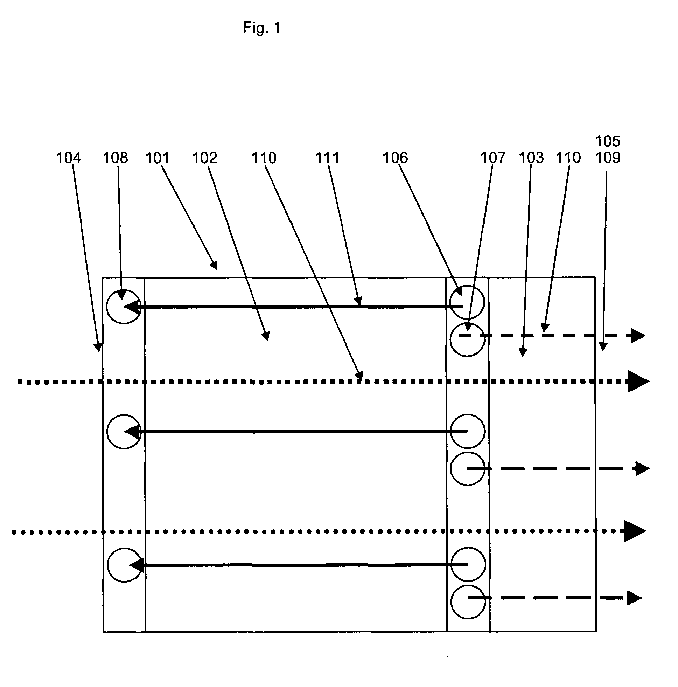

Fig. 1 shows the gas flow pattern according to one embodiment of the invention where counter-flow and co-flow is applied to the cell by one cathode gas flow direction and two anode gas flow directions, where one anode gas flow direction is substantially the same direction as the cathode gas flow direction, and the other anode gas flow direction is substantially opposite. In this context, substantially means that in local areas of the cell, the precise flow direction of anode or cathode gas may vary from the two overall opposite flow directions, but as a whole in the specified parts of the cell, there is a net cathode or anode gas flow in either one direction or the opposite directions.

Fig. 1 shows the anode surface 101 of a single fuel cell, and therefore the anode gas flows are shown as full and dashed lines, and where the cathode gas flow on the opposite, not visible surface of the cell as shown is illustrated as a dotted line. The anode gas first enters the anode surface of the cell through the first anode gas inlet region 106 which is formed as holes in the cell. From there, the anode gas flows over a first anode part of the cell 102 in a second gas flow direction 111 to the first anode gas outlet region 108 also formed as holes in the cell.

When exiting the first anode gas outlet region, the partly reacted anode gas from each of the like cells in a cell stack is collected (not shown) and mixed into a common intermediate anode gas stream, and subsequently this gas stream is again split and re-enters each fuel cell via the second anode gas inlet region 107. The anode gas performs a second flow pass across a second anode part of the cell 103 in a substantially first gas flow direction 110 and finally exits via the second anode gas outlet region 109 formed simply by the edge of the cell where the exhausted anode gas mixes with the exhausted cathode gas. On the opposite, not visible cathode surface of the cell, the cathode gas is flowing in a substantially first gas flow direction 110 across the substantially entire active area of the cell, i.e. across both the first and the second part of the cell from the cathode gas inlet region 104 to the cathode gas outlet region 105. Hence, since the first gas flow direction is opposite the second gas flow direction, it can be seen from Fig. 1 that the cell according to this embodiment of the invention has a counter-flow on the first part of the cell and a co-flow on the second part of the cell with respect to the anode and cathode gas.

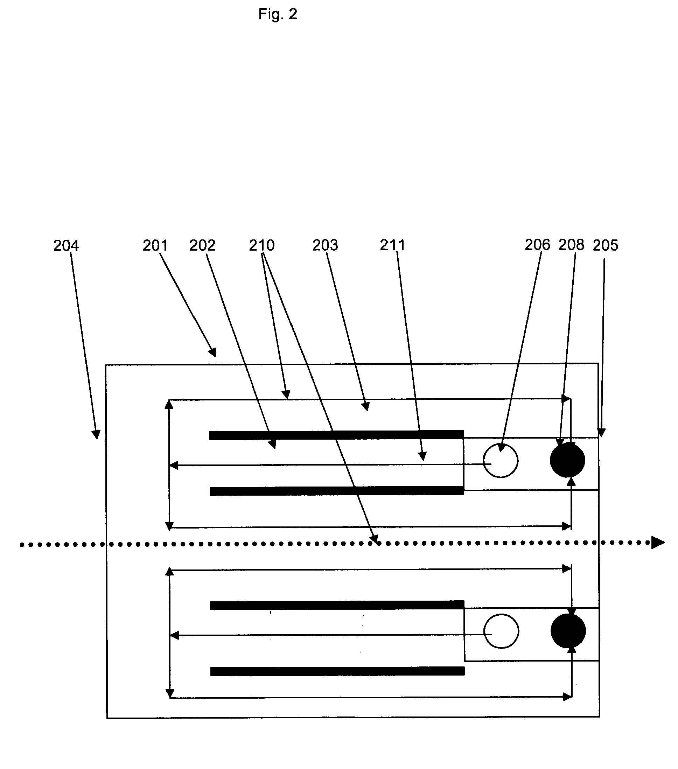

Fig. 2 shows another embodiment of the invention, where there is only one anode gas inlet region 206 and one anode gas outlet region 208, both formed as holes in the cell by means of an internal manifolding (not shown) as known in the art. A cell anode surface 201 is shown where the anode gas enters through the first anode gas inlet region 206. The anode gas flows in a second gas flow direction 211 across a first anode part of the cell 202. By means of the gas flow channels of the facing interconnect (not shown) the anode gas is then forced to flow in the opposite, first gas flow direction 210 on a second anode part of the cell 203 before it exits through the first anode gas outlet region 208.

On the opposite, not visible, cathode side of the cell, the cathode gas enters through the cathode gas inlet region 204 passes across the substantially entire part of the active cathode surface of the cell in a first gas flow direction 210 and finally exits through the cathode gas outlet region 205. The cathode gas inlet and outlet regions are both formed as the first and second edge of the cell by means of external manifolding (not shown) as known in the art. Accordingly, the anode gas flows in a second gas flow direction across a first part and a first gas flow direction across a second part of the cell, and as the cathode gas flows in a first gas flow direction across both the first and the second part of the cell, the cell has a counter-flow across the first and a co-flow over the second part of the cell with respect to anode and cathode gas.

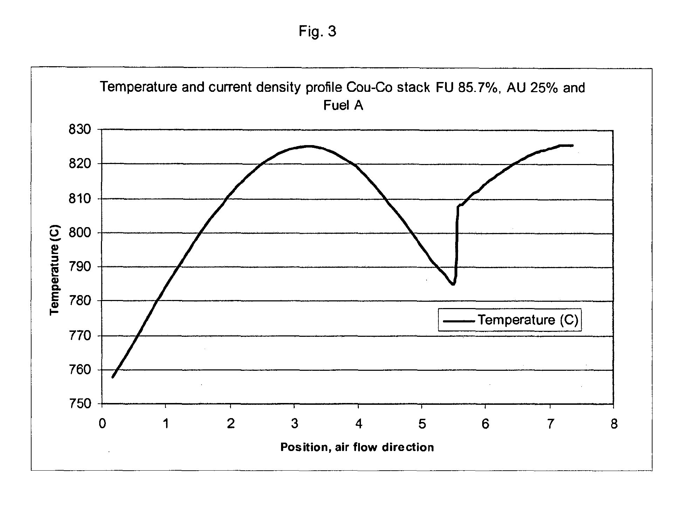

The chart diagram in Fig. 3 shows the correlation between the internal temperature in a cell and thus in a whole cell stack during operation. On the X-axis, the position of the cell in the cathode gas flow direction is shown. Accordingly position "0" is the first edge of the cell as referred to in the above, and position (approximately) "8" is the second, opposite edge of the cell in the embodiment where the cathode gas is supplied via external manifolding and thus enters and exits the cell via the inlet and outlet regions formed by the entire first and second edges of the cell. The Y-axis of the chart diagram shows the temperature of the cell in degrees Celsius. The cell has a combined counter-flow and co-flow of the anode gas relative to the cathode gas according to the invention.

This combined flow pattern is clear from the temperature profile shown in Fig. 3: On the first part of the cell, i.e. from circa position "0" to position "5.5", the cell has a counter-flow; the cathode gas flows in a first direction whereas the anode gas flows in an opposite, second direction. This can be seen on the graph as a relative low temperature near position "0" where the relatively cold cathode gas enters the cell. The relatively hot anode gas exits the cell also at position "0", but since the cathode gas flow is larger than the anode gas flow, the resulting temperature is relatively low at this position.

From position "0" and onwards to circa position "3.5" the cell temperature rises steadily as the cathode gas is heated by the electro-chemical reactions in the cell. Thereafter the cell temperature drops steadily as the first anode inlet region is approached, because the entering anode gas is relative cold and thus lowers the resulting temperature of the cell. The local lowest resulting temperature at the position near the first anode gas inlet (circa position "5.5") is, however, not as low as the lowest resulting temperature near position "0", again because the anode gas flow is smaller than the cathode gas flow and therefore has a relatively lower influence on the resulting temperature. This far, from position "0" to circa position "5.5", the cell temperature profile corresponds to a state of the art counter-flow cell.

Near position "5.5" the anode gas having exited the cell via the first anode gas outlet region near position "0" re-enters the cell via the second anode gas inlet region and performs a second flow pass. Now, the anode gas flows in the first gas flow direction, hence, from circa position "5.5" to circa position "8" the cell has a co-flow of the anode gas relative to the cathode gas. The consequence is clearly seen on the temperature graph: From circa position "5.5" to "8" the temperature increases rapidly as both the anode gas and the cathode gas have already been pre-heated during the flow pass on the first part of the cell. After a first steep increase to approximately the level of the cathode gas and the anode gas temperature when entering the second part of the cell, the resulting temperature increases more steadily all the way to the second edge of the cell near position "8", where the resulting temperature has reached its maximum temperature which is near or equal to the maximum allowable temperature of the stack considering the durability of the arrangement. This second part of the temperature profile (when disregarding the initial steep temperature increase) corresponds to the temperature profile of a state of the art co-flow cell. The initial steep temperature increase is among other caused by a considerable horizontal thermal conduction in the interconnect which has the effect that the large amount of heat developed in the pure hydrogen region (viz. the co-flow part) is spread to the inlet area of the Co-flow part.

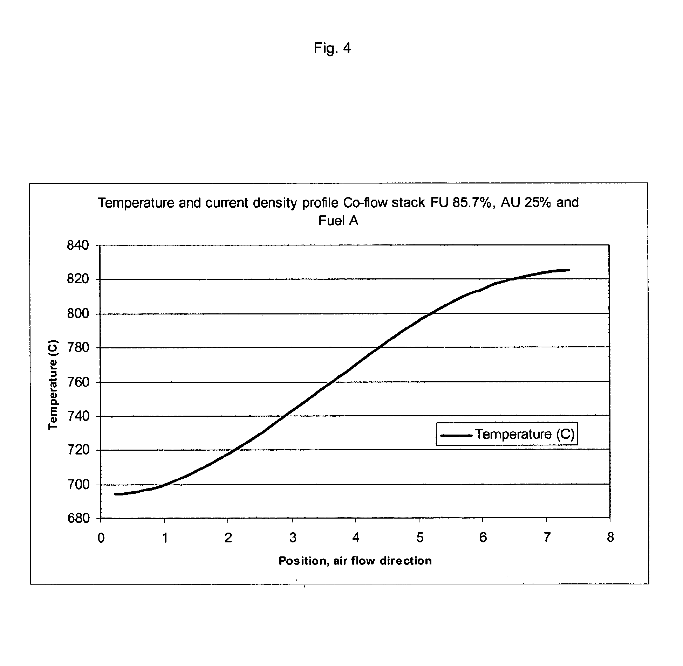

In Fig. 4, for comparison, a temperature profile for such a co-flow cell can be seen. Both reach circa the same maximum temperature, which has the mentioned advantage of maximising the cooling efficiency, which minimises the parasitic losses to for instance gas blowers. But the average temperature of the whole cell is considerably lower for the co-flow cell, as can be seen in Fig. 4 than for the combined counter-flow / co-flow cell according to the invention. This is obvious when comparing Fig. 3 and Fig. 4. Accordingly the temperature profile of the combined flow cell as seen in Fig. 3 has a relatively high average cell temperature as well as a high outlet temperature of the gasses, and therefore has the advantage of both relative low ASR and relative high cooling efficiency.

### Example.

For a solid oxide fuel cell stack, the power density for Co-flow, Counter-flow and combined counter-co-flow is calculated under the following conditions:
- Fuel type:: Pre-reformed natural gas
- Fuel utilisation:: 86%
- Air utilisation:: 25% (for case 1-3, variable in case 4-5)
- Air and fuel inlet temperatures:: 700°C
- Maximum temperature of stack:: 825°C
- Cell type:: 1 (LSM cathode)

Under these specific conditions, a split of the cell area into a first area of 66% of the substantial, total, active area for counter-flow, and 34% of the substantial total active area for co-flow is close to an optimum according to the invention, when maximising power density. The combined counter-co-flow case is compared to pure counter- and pure co-flow state of the art stacks:

| Flow geometry | *Air utilisation* | Cell voltage | Current density | *Effect per stack* |
|---|---|---|---|---|
| 1. Counter-flow | *25%* | 843 mV | 1300 A/m² | *817 W* |
| 2. Co-flow | *25%* | 773 mV | 2160 A/m² | *1245 W* |
| 3. Combined Cou-Co | *25%* | 757 mV | 3180 A/m² | *1814 W* |
| 4. Counter-flow | *15*% | 757 mV | 3182 A/m² | *1819 W* |
| 5. Co-flow | *22%* | 757 mV | 2472 A/m² | *1414 W* |

At the same air utilisation, a significant power density increase is obtained with the combined counter-co-flow geometry with the consequence of a slightly lower cell voltage causing a drop in the electrical efficiency of 10% compared to counter-flow.

Changing the operation specification to a fixed cell voltage of 757mV (meaning fixed electrical efficiency), the current density of the counter-flow and co-flow stacks can be increased, if the air utilisation is decreased. The effect of this is represented by case 4 and 5.

Compared to a counter-flow having same efficiency and power density as the combined flow geometry, the air flow of the combined flow case is 40% lower, which e.g. minimises the blower power and heat exchanger costs. This is also of major importance, because the blower constitutes the largest parasitic loss in most systems.

Comparing the combined counter-co-flow case with the co-flow case, the combined case is clearly the better choice. Having the same electrical efficiency (cell voltage), the power density of the co-flow stack is 22% lower, and the air flow is a little higher.

The most common range for cell area splitting with typical operating conditions, a reforming fuel and a specific cell type is 20 to 40% co-flow area.

In the case of e.g. larger cells or faster reforming, the outlet temperature of the counter-flow part becomes lower, and the co-flow part has to constitute a larger part of the total cell area. This is a general rule in the case of changed operating parameters (air utilisation, fuel utilisation, inlet and outlet temperatures, and fuel composition); if the counter-flow part outlet is relatively low, or the Nernst potential in the co-flow part is low, the co-flow part must constitute a larger part of the cell e.g. 40 to 50%.

Conversely it is also possible to use the same operating parameters and cell characteristics to increase the counter-flow part outlet temperature or Nernst potential of the co-flow part to a relatively high level. In that case the co-flow part may constitute only a small part of the cell area e.g. 5 to 20%. A small co-flow part is also relevant in the case of two stacks in serial connection, as the co-flow stack can be operated at a lower cell voltage, generating more heat.

## Claims

1. A cell stack comprising a plurality of cells adapted to operate as fuel cells or electrolysis cells and stacked on top of each other to form a plurality of cell layers in the cell stack, each of said cells comprising
• an anode,
• an electrolyte,
• and a cathode,
where each cell is flat and has
• at least one edge,
• at least one anode gas inlet region,
• at least one anode gas outlet region,
• at least one cathode gas inlet region,
• and at least one cathode gas outlet region,
• and a first anode gas inlet region is located between the first and the second edge of the cell,
• a second anode gas inlet region is located between the first and the second edge of the cell,
where each layer of cells is divided by an interconnect with gas flow channels on each side, viz. a first side facing the anode side of an adjacent cell and providing an anode gas flow, and a second side facing the cathode side of an adjacent cell and providing a cathode gas flow, wherein a first part of each cell has a counter-flow of the anode gas flow direction relative to the cathode gas flow direction, and wherein a second part of each cell has a co-flow of the anode gas flow direction relative to the cathode gas flow direction, wherein the anode gas performs a first flow pass in counter-flow relative to the cathode gas, and the cell stack further comprises a manifolding adapted to distribute the anode gas further to the second anode gas inlet region of each cell, and after distributing said anode gas performs a second flow pass in co-flow relative to the cathode gas.

2. A cell stack comprising a plurality of cells according to claim 1, wherein the cathode gas flows in a first direction across the substantially entire cathode part of each cell and the anode gas flows in a second direction opposite the first direction across a first anode part of each cell and flows in said first direction across a second anode part of each cell.

3. A cell stack comprising a plurality of cells according to claim 2, wherein
• the cathode gas inlet region is located near a first edge of the cell,
• the cathode gas outlet region is located near a second edge of the cell,
• and a first anode gas inlet region is located between the first and the second edge of the cell,
• a first anode gas outlet region is located near the first edge of the cell,
• a second anode gas inlet region is located between the first and the second edge of the cell,
• and a second anode gas outlet region is located near the second edge of the cell.

4. A cell stack comprising a plurality of cells according to claim 3, comprising a manifolding adapted to collect and mix the anode gas from the first anode gas outlet region of each cell and to distribute the mixed anode gas further to the second anode gas inlet region of each cell, whereby the anode gas performs a first flow pass in counter-flow relative to the cathode gas, and after said collecting, mixing and distributing said anode gas performs a second flow pass in co-flow relative to the cathode gas.

5. A cell stack comprising a plurality of cells according to claim 1 or 2, wherein the gas flow channels facing the anode side of each cell are adapted to provide anode gas flow in a first direction across a first part of each cell and are adapted to provide an anode gas flow in a second direction opposite the first direction across a second part of each cell.

6. A cell stack comprising a plurality of cells according to any of the preceding claims, wherein the first part of each cell which has counter-flow is larger than the second part of each cell which has co-flow, said first part preferably being between 95% and 50% of each cell or preferably between 85% and 70% of each cell.

7. A cell stack comprising a plurality of cells according to any of the preceding claims, wherein the cells are Solid Oxide Fuel Cells or Solid Electrolysis Cells.

8. Method of operating at least one cell stack comprising a plurality of cells, where said cells are adapted to operate as fuel cells or electrolysis cells and are stacked on top of each other to form a plurality of cell layers in the at least one cell stack, each of said cells comprising an anode, an electrolyte and a cathode, where each cell is flat and has at least one edge, at least one anode gas inlet region, at least one anode gas outlet region, at least one cathode gas inlet region and at least one cathode gas outlet region, a first anode gas inlet region is located between the first and the second edge of the cell, a second anode gas inlet region is located between the first and the second edge of the cell, where each layer of cells is divided by an interconnect with gas channels on each side, viz. a first side facing the anode side of an adjacent cell and providing an anode gas flow, and a second side facing the cathode side of an adjacent cell and providing a cathode gas flow, said method comprising the steps of
• providing a first anode gas flow pass in counter-flow of the anode gas flow direction relative to the cathode gas flow direction across more than half the total cell area
• providing a manifolding adapted to distribute the anode gas from said first flow pass further to the second anode gas inlet region of each cell
• providing a second anode gas flow pass in co-flow of the anode gas flow direction relative to the cathode gas flow direction across less than half the total cell area.

9. Method of operating at least one cell stack comprising a plurality of cells according to claim 8 further comprising the steps of
• providing the counter-flow of the anode gas flow direction relative to the cathode gas flow direction to a first cell stack of two cell stacks which are serially connected in relation to both the anode and the cathode gas flow
• providing the co-flow of the anode gas flow direction relative to the cathode gas flow direction to a second cell stack of said two cell stacks, which are serially connected in relation to both the anode and the cathode gas flow.

10. Method according to claim 8 of operating at least one cell stack comprising a plurality of cells according to any of the claims 1 to 7, said method further comprising the steps of
• providing the counter-flow of the anode gas flow direction relative to the cathode gas flow direction to a first part of each cell in the at least one cell stack
• providing the co-flow of the anode gas flow direction relative to the cathode gas flow direction to a second part of each cell in the at least one cell stack.

11. Use of a cell stack comprising a plurality of cells according to any of the claims 1 to 7 to operate as a Solid Oxide Fuel Cell stack or an Solid Oxide Electrolysis Cell stack.

## Patentansprüche

1. Zellenstapel, umfassend eine Vielzahl von Zellen, die als Brennstoffzellen oder Elektrolysezellen betrieben werden und die so aufeinander gestapelt sind, dass sie eine Vielzahl von Zellenschichten in dem Zellenstapel bilden, wobei jede dieser Zellen umfasst
• eine Anode,
• einen Elektrolyt,
• und eine Kathode,
wobei jede Zelle flach ist und
• mindestens einen Rand,
• mindestens einen Anodengaseintrittsbereich,
• mindestens einen Anodengasaustrittsbereich,
• mindestens einen Kathodengaseintrittsbereich,
• und mindestens einen Kathodengasaustrittsbereich
besitzt,
• und ein erster Anodengaseintrittsbereich zwischen dem ersten und dem zweiten Zellenrand angeordnet ist
• ein zweiter Anodengaseintrittsbereich zwischen dem ersten und dem zweiten Zellenrand angeordnet ist,
wobei jede Zellenschicht durch eine Zwischenverbindung mit Gasströmungskanälen auf jeder Seite geteilt ist und zwar so, dass eine erste Seite gegenüber der Anodenseite einer benachbarten Zelle liegt und einen Anodengasstrom bereitstellt und eine zweite Seite gegenüber der Kathodenseite einer benachbarten Zelle liegt und einen Kathodengasstrom bereitstellt, wobei ein erster Teil jeder Zelle einen Gegenstrom der Anodengasströmungsrichtung relativ zu der Kathodengasströmungsrichtung besitzt, und wobei ein zweiter Teil jeder Zelle einen Gleichstrom der Anodengasströmungsrichtung relativ zu der Kathodengasströmungsrichtung besitzt, wobei das Anodengas beim ersten Durchfluss im Gegenstrom relativ zu dem Kathodengas fließt, und der Zellenstapel weiterhin einen Verteiler umfasst, der so ausgebildet ist, dass er das Anodengas in den zweiten Anodengaseintrittsbereich jeder Zelle verteilt, und nach der Verteilung fließt das Anodengas im zweiten Durchfluss im Gleichstrom relativ zu dem Kathodengas.

2. Zellenstapel, umfassend eine Vielzahl von Zellen gemäß Anspruch 1, wobei das Kathodengas im wesentlichen über den gesamten Kathodenteil jeder Zelle in einer ersten Richtung strömt und das Anodengas in einer zweiten Richtung, entgegen der ersten Richtung, über einen ersten Anodenteil jeder Zelle strömt, und in die erste Richtung über einen zweiten Anodenteil jeder Zelle strömt.

3. Zellenstapel, umfassend eine Vielzahl von Zellen gemäß Anspruch 2, wobei
• der Kathodengaseintrittsbereich in der Nähe eines ersten Zellenrandes angeordnet ist,
• der Kathodengasaustrittsbereich in der Nähe eines zweiten Zellenrandes angeordnet ist,
• und ein erster Anodengaseintrittsbereich zwischen dem ersten und dem zweiten Zellenrand angeordnet ist,
• ein erster Anodengasaustrittsbereich in der Nähe des ersten Zellenrandes angeordnet ist,
• ein zweiter Anodengaseintrittsbereich zwischen dem ersten und dem zweiten Zellenrand angeordnet ist,
• und ein zweiter Anodengasaustrittsbereich in der Nähe des zweiten Zellenrandes angeordnet ist.

4. Zellenstapel, umfassend eine Vielzahl von Zellen gemäß Anspruch 3, umfassend einen Verteiler, der so ausgebildet ist, dass er das Anodengas von dem ersten Anodengasaustrittsbereich jeder Zelle sammelt und vermischt und das gemischte Anodengas zu dem zweiten Anodengaseintrittsbereich jeder Zelle weiterleitet, wobei das Anodengas in einem ersten Durchfluss im Gegenstrom relativ zu dem Kathodengas strömt, und nach dem Sammeln, Mischen und Verteilen in einem zweiten Durchfluss im Gleichstrom relativ zu dem Kathodengas strömt.

5. Zellenstapel, umfassend eine Vielzahl von Zellen gemäß Anspruch 1 oder 2, wobei die Gasströmungskanäle gegenüber der Anodenseite jeder Zelle so angepasst sind, dass sie den Anodengasstrom in einer ersten Richtung über den ersten Teil jeder Zelle bereitstellen und so ausgebildet sind, dass sie eine Anodengasströmung in einer zweiten Richtung entgegen der ersten Richtung über einen zweiten Teil jeder Zelle bereitstellen.

6. Zellenstapel, umfassend eine Vielzahl von Zellen gemäß einem der vorhergehenden Ansprüche, wobei der erste Teil jeder Zelle, der einen Gegenstrom besitzt, größer als der zweite Teil jeder Zelle ist, der einen Gleichstrom besitzt; der erste Teil beansprucht bevorzugt zwischen 95 % und 50 % oder besonders bevorzugt zwischen 85 % und 70 % jeder Zelle.

7. Zellenstapel, umfassend eine Vielzahl von Zellen gemäß einem der vorhergehenden Ansprüchen, wobei die Zellen Festoxid-Brennstoffzellen oder Festoxid-Elektrolysezellen sind.

8. Verfahren zum Betreiben mindestens eines Zellenstapels, umfassend eine Vielzahl von Zellen, wobei die Zellen als Brennstoffzellen oder Elektrolysezellen betrieben werden und so aufeinander gestapelt sind, dass sie eine Vielzahl von Zellenschichten in dem mindestens einen Zellenstapel bilden; jede dieser Zellen umfasst eine Anode, einen Elektrolyt und eine Kathode, wobei jede Zelle flach ist und mindestens einen Rand, mindestens einen Anodengaseintrittsbereich, mindestens einen Anodengasaustrittsbereich, mindestens einen Kathodengaseintrittsbereich und mindestens einen Kathodengasaustrittsbereich besitzt, ein erster Anodengaseintrittsbereich zwischen dem ersten und dem zweiten Zellenrand angeordnet ist, ein zweiter Anodengaseintrittsbereich zwischen dem ersten und dem zweiten Zellenrand angeordnet ist, jede Zellenschicht durch eine Zwischenverbindung mit Gasströmungskanälen auf jeder Seite geteilt ist und zwar so, dass eine erste Seite gegenüber der Anodenseite einer benachbarten Zelle liegt und einen Anodengasstrom bereitstellt und eine zweite Seite gegenüber der Kathodenseite einer benachbarten Zelle liegt und einen Kathodengasstrom bereitstellt, wobei das Verfahren folgende Schritte umfasst:
• Bereitstellen eines ersten Durchflusses des Anodengases im Gegenstrom des Anodengasstroms relativ zur Kathodengasströmungsrichtung über mehr als die Hälfte der gesamten Zellenfläche.
• Bereitstellen eines Verteilers, der so ausgebildet ist, dass er das Anodengas aus dem ersten Durchfluss in den zweiten Anodengaseintrittsbereich jeder Zelle verteilt
• Bereitstellen eines zweiten Durchflusses des Anodengases im Gleichstrom des Anodengasstroms relativ zur Kathodengasströmungsrichtung über weniger als die Hälfte der gesamten Zellenfläche.

9. Verfahren zum Betreiben mindestens eines Zellenstapels, umfassend eine Vielzahl von Zellen gemäß Anspruch 8, weiter umfassend die Schritte:
• Bereitstellen des Gegenstromes der Anodengasströmungsrichtung relativ zu der Kathodengasströmungsrichtung zu einem ersten Zellenstapel aus zwei Zellenstapeln, die bezüglich beider der Anoden- und der Kathodengasströme in Reihe geschaltet sind
• Bereitstellen des Gleichstromes der Anodengasströmungsrichtung relativ zu der Kathodengasströmungsrichtung zu einem zweiten Zellenstapel aus zwei Zellenstapeln, die bezüglich beider der Anoden- und der Kathodengasströme in Reihe geschaltet sind.

10. Verfahren gemäß Anspruch 8 zum Betreiben mindestens eines Zellenstapels, umfassend eine Vielzahl von Zellen gemäß einem der Ansprüche 1 bis 7, wobei das Verfahren die weiteren Schritte umfasst:
• Bereitstellen des Gegenstromes der Anodengasströmungsrichtung relativ zu der Kathodengasströmungsrichtung zu einem ersten Teil jeder Zelle in dem mindestens einen Zellenstapel
• Bereitstellen des Gleichstromes der Anodengasströmungsrichtung relativ zu der Kathodengasströmungsrichtung zu einem zweiten Teil jeder Zelle in dem mindestens einen Zellenstapel.

11. Verwendung eines Zellenstapels, umfassend eine Vielzahl von Zellen gemäß einem der Ansprüche 1 bis 7, zum Betreiben als einen Festoxid-Brennstoffzellenstapel oder einen Festoxid-Elektrolysezellenstapel.

## Revendications

1. Assemblage de piles comprenant une pluralité de piles adaptées à fonctionner comme des piles à combustible ou des piles à électrolyse et assemblées les unes par-dessus les autres pour former une pluralité de couches de piles dans l'assemblage de piles, chacune desdites piles comprenant
• une anode,
• un électrolyte,
• et une cathode,
où chaque pile est plate et a
• au moins un bord,
• au moins une région d'entrée de gaz d'anode,
• au moins une région de sortie de gaz d'anode,
• au moins une région d'entrée de gaz de cathode,
• et au moins une région de sortie de gaz de cathode,
• et une première région d'entrée de gaz d'anode est située entre le premier et le deuxième bord de la pile,
• une deuxième région d'entrée de gaz d'anode est située entre le premier et le deuxième bord de la pile,
où chaque couche de piles est divisée par une interconnexion avec des canaux de courant de gaz sur chaque côté, à savoir un premier côté faisant face au côté d'anode d'une pile adjacente et délivrant un courant de gaz d'anode, et un deuxième côté faisant face au côté de cathode d'une pile adjacente et délivrant un courant de gaz de cathode, dans lequel une première partie de chaque pile a un contre-courant du sens de courant de gaz d'anode par rapport au sens de courant de gaz de cathode, et dans lequel une deuxième partie de chaque pile a un cocourant du sens de courant de gaz d'anode par rapport au sens de courant de gaz de cathode, dans lequel le gaz d'anode effectue un premier passage de courant à contre-courant par rapport au gaz de cathode, et l'assemblage de piles comprend en outre un distributeur adapté à distribuer le gaz d'anode en outre à la deuxième région d'entrée de gaz d'anode de chaque pile, et après distribution, ledit gaz d'anode effectue un deuxième passage de courant à cocourant par rapport au gaz de cathode.

2. Assemblage de piles comprenant une pluralité de piles selon la revendication 1, dans lequel le gaz de cathode s'écoule dans un premier sens au travers de sensiblement la totalité de la partie de cathode de chaque pile et le gaz d'anode s'écoule dans un deuxième sens opposé au premier sens au travers d'une première partie d'anode de chaque pile et s'écoule dans ledit premier sens au travers d'une deuxième partie d'anode de chaque pile.

3. Assemblage de piles comprenant une pluralité de piles selon la revendication 2, dans lequel
• la région d'entrée de gaz de cathode est située à proximité d'un premier bord de la pile,
• la région de sortie de gaz de cathode est située à proximité d'un deuxième bord de la pile,
• et une première région d'entrée de gaz d'anode est située entre les premier et deuxième bords de la pile,
• une première région de sortie de gaz d'anode est située à proximité du premier bord de la pile,
• une deuxième région d'entrée de gaz d'anode est située entre les premier et deuxième bords de la pile,
• et une deuxième région de sortie de gaz d'anode est située à proximité du deuxième bord de la pile.

4. Assemblage de piles comprenant une pluralité de piles selon la revendication 3, comprenant un distributeur adapté à collecter et mélanger le gaz d'anode provenant de la première région de sortie de gaz d'anode de chaque pile et à distribuer le gaz d'anode mélangé en outre à la deuxième région d'entrée de gaz d'anode de chaque pile, d'où il résulte que le gaz d'anode effectue un premier passage de courant à contre-courant par rapport au gaz de cathode, et après ladite collecte, ledit mélange et ladite distribution, ledit gaz d'anode effectue un deuxième passage de courant à cocourant par rapport au gaz de cathode.

5. Assemblage de piles comprenant une pluralité de piles selon la revendication 1 ou 2, dans lequel les canaux de courant de gaz faisant face au côté d'anode de chaque pile sont adaptés à délivrer un courant de gaz d'anode dans un premier sens au travers d'une première partie de chaque pile et sont adaptés à délivrer un courant de gaz d'anode dans un deuxième sens opposé au premier sens au travers d'une deuxième partie de chaque pile.

6. Assemblage de piles comprenant une pluralité de piles selon l'une quelconque des revendications précédentes, dans lequel la première partie de chaque pile qui a un contre-courant est plus grande que la deuxième partie de chaque pile qui a un cocourant, ladite première partie étant préférablement entre 95% et 50% de chaque pile ou préférablement entre 85% et 70% de chaque pile.

7. Assemblage de piles comprenant une pluralité de piles selon l'une quelconque des revendications précédentes, dans lequel les piles sont des piles à combustible à oxyde solide ou des piles à électrolyse à oxyde solide.

8. Procédé d'utilisation d'au moins un assemblage de piles comprenant une pluralité de piles, où lesdites piles sont adaptées à fonctionner comme des piles à combustible ou des piles à électrolyse et sont assemblées les unes par-dessus les autres pour former une pluralité de couches de piles dans l'au moins un assemblage de piles, chacune desdites piles comprenant une anode, un électrolyte et une cathode, où chaque pile est plate et a au moins un bord, au moins une région d'entrée de gaz d'anode, au moins une région de sortie de gaz d'anode, au moins une région d'entrée de gaz de cathode et au moins une région de sortie de gaz de cathode, une première région d'entrée de gaz d'anode est située entre les premier et deuxième bords de la pile, une deuxième région d'entrée de gaz d'anode est située entre les premier et deuxième bords de la pile, où chaque couche de piles est divisée par une interconnexion avec des canaux de gaz sur chaque côté, à savoir un premier côté faisant face au côté d'anode d'une pile adjacente et délivrant un courant de gaz d'anode, et un deuxième côté faisant face au côté de cathode d'une pile adjacente et délivrant un courant de gaz de cathode, ledit procédé comprenant les étapes de
• délivrance d'un premier passage de courant de gaz d'anode à contre-courant du sens de courant de gaz d'anode par rapport au sens de courant de gaz de cathode au travers de plus de la moitié de la superficie totale de pile
• délivrance d'un distributeur adapté à distribuer le gaz d'anode provenant dudit premier passage de courant en outre jusqu'à la deuxième région d'entrée de gaz d'anode de chaque pile
• délivrance d'un deuxième passage de courant de gaz d'anode à cocourant du sens de courant de gaz d'anode par rapport au sens de courant de gaz de cathode au travers de moins de la moitié de la superficie totale de pile.

9. Procédé d'utilisation d'au moins un assemblage de piles comprenant une pluralité de piles selon la revendication 8 comprenant en outre les étapes de
• délivrance du contre-courant du sens de courant de gaz d'anode par rapport au sens de courant de gaz de cathode jusqu'à un premier assemblage de piles de deux assemblages de piles qui sont connectés en série par rapport aux deux des courants de gaz d'anode et de cathode
• délivrance du cocourant du sens de courant de gaz d'anode par rapport au sens de courant de gaz de cathode jusqu'à un deuxième assemblage de piles desdits deux assemblages de piles, qui sont connectés en série par rapport aux deux des courants de gaz d'anode et de cathode.

10. Procédé selon la revendication 8 d'utilisation d'au moins un assemblage de piles comprenant une pluralité de piles selon l'une quelconque des revendications 1 à 7, ledit procédé comprenant en outre les étapes de
• délivrance du contre-courant du sens de courant de gaz d'anode par rapport au sens de courant de gaz de cathode jusqu'à une première partie de chaque pile dans l'au moins un assemblage de piles
• délivrance du cocourant du sens de courant de gaz d'anode par rapport au sens de courant de gaz de cathode jusqu'à une deuxième partie de chaque pile dans l'au moins un assemblage de piles.

11. Utilisation d'un assemblage de piles comprenant une pluralité de piles selon l'une quelconque des revendications 1 à 7 pour fonctionner comme un assemblage de piles à combustible à oxyde solide ou un assemblage de piles à électrolyse à oxyde solide.
